# EUROPÄISCHE PATENTANMELDUNG

(11) **EP 0 974 983 A1**
(43) Veröffentlichungstag der Anmeldung: **26.01.2000**
(21) Anmeldenummer: 99112093.2
(22) Anmeldetag: 23.06.1999
(51) Int. Cl.: H01C 7/04

(54) **Thermistor**

(30) Priorität: 21.07.1998 DE 19832843
(71) Anmelder: Heraeus Electro-Nite International N.V., 3530 Houthalen (BE)
(72) Erfinder: Häfele, Edelbert, Dr., 76228 Karlsruhe (DE); Schönauer, Ulrich, Dr., 76344 Eggenstein (DE)
(74) Vertreter: Kühn, Hans-Christian

(57) **Zusammenfassung**

Die Erfindung betrifft einen Thermistor aus einem Mischoxidmaterial mit negativem Temperaturkoeffizienten des spezifischen elektrischen Widerstands sowie Verfahren zu seiner Herstellung basierend auf Dünn- und/oder Dickschichttechnik und seine Verwendung. Das Mischoxidmaterial hat eine Zusammensetzung der allgemeinen Formel Ln_{1 - y} M_{y}A_{1 - x} Bₓ O₃ , wobei Ln wenigstens ein Seltenerdelement oder eine Mischung von diesen ist, M mindestens ein Element aus der Reihe der Erdalkalien, A aus Chrom oder Zirkon gebildet ist und B aus Gallium oder Indium gebildet ist.
Die erfindungsgemäßen Thermistoren haben gegenüber den aus dem Stand der Technik bekannten NTC- oder PTC-Thermistoren den Vorteil, daß sie reproduzierbare Meßwerte auch bei nicht-oxidierenden Prozessen mit geringem Sauerstoffgehalt liefern, daß sie langzeitstabil sind und daß sie auch bei relativ niedrigen Temperaturen eine hohe elektrische Leitfähigkeit zeigen. Letzteres sogar wenn die erfindungsgemäßen Thermistoren in Form einer dünnen Schicht vorliegen.

## Beschreibung

Die Erfindung betrifft einen Thermistor aus einem Mischoxidmaterial mit negativem Temperaturkoeffizienten des spezifischen elektrischen Widerstands sowie Verfahren zu seiner Herstellung und seine Verwendung.

Thermistoren oder Thermistor-Bauteile, seien es solche mit negativem oder solche mit positiven Temperaturkoeffizienten (sogenannte NTC- bzw. PTC-Thermistoren oder -Widerstände) sind aus den Stand der Technik, wie er beispielsweise in Weichert, L. et al. "Temperaturmessung in der Technik", expert verlag, 5. Auflage 1992 beschrieben ist, hinreichend bekannt. Beispielhaft für NTC-Thermistoren sind Mischoxidkeramiken aus Fe₃O₄ oder Zn₂TiO₄ mit Zusätzen von NiO oder CoO zu nennen. Als PTC-Thermistoren werden nach DIN 44080 sogenannte Kaltleiter wie polykristallines Bariumtitanat bezeichnet, das vorwiegend als Grenztemperaturschalter im Temperaturintervall zwischen -110°C und maximal 300°C verwendet wird. Als gemeinsames Problem dieser "klassischen" Thermistoren ist anzusehen, daß ihre Widerstandswerte auch bei höheren Temperaturen noch im kΩ - Bereich liegen und daß sich eine mehr oder weniger starke Drift ihrer Kennwerte ergibt, wenn sie in reduzierender Atmosphäre (mit einem hohen Defizit an Sauerstoff) eingesetzt werde; letzteres insbesondere bei hohen Temperaturen. Der Einsatz dieser Thermistoren ist daher für die technische Temperaturmessung nur eingeschränkt sinnvoll.
Außerdem sind aus US 5,568,116 Thermistoren aus keramischen Verbindungen bekannt, die aufgrund ihrer zum Teil sehr niedrigen Leitfähigkeit in Form von gesinterten Preßkörpern in Dimensionen von mehreren Millimetern hergestellt werden müssen.

Es ist daher Aufgabe der Erfindung einen Thermistor anzugeben, der die vorstehenden Nachteile des Standes der Technik überwindet indem er reproduzierbare Meßwerte auch bei nichtoxidierenden Prozessen mit geringem Sauerstoffgehalt liefert, langzeitstabil ist und eine höhere Leitfähigkeit aufweist.

Erfindungsgemäß wird diese Aufgabe dadurch gelöst, daß der Thermistor ein Mischoxidmaterial, das einen negativen Temperaturkoeffizienten des spezifischen elektrischen Widerstands und eine perowskitische Kristallstruktur aufweist, umfaßt, mit einer Zusammensetzung gemäß der allgemeinen Formel Ln_{1 - y}M_{y}A_{1 - x}BₓO₃ , wobei Ln wenigstens ein Seltenerdelement oder eine Mischung von diesen ist, M mindestens ein Element aus der Reihe der Erdalkalien ist, A aus Chrom oder Zirkon gebildet ist und B aus Gallium oder Indium gebildet ist. Zu den Seltenerdmetallen sollen hier die Elemente mit den Ordnungszahlen 39 und 57 bis 71 gehören. Der negative Temperaturkoeffizient des elektrischen Widerstandes für ein Mischoxidmaterial des erfindungsgemäßen Thermistors liegt je nach konkreter Zusammensetzung im Bereich von -3‰ /K bis -100‰ /K. Weiterhin weist das Mischoxidmaterial des Thermistors eine perowskitische Kristallstruktur auf nach der allgemeinen Formel - ABO₃ - (A und B hier nicht identisch mit A, B aus Anspruch 1), wobei hier die Summe der Ladungen der Kationen A und B gleich 6 ist und eines der beiden Kationen eine mit O²⁻ vergleichbare Größe aufweist, während das andere wesentlich kleiner als O²⁻ ist. Thermistorbauteile mit den vorgenannten Merkmalen sind insbesondere für den Einsatz in nicht-oxidierender Atmosphäre geeignet, da die als B eingesetzten Metalle sich als Oxide äußerst redoxstabil erweisen und nur geringfügig zur Bildung von Sauerstoffleerstellen im Kristallgitter beitragen. Weiterhin zeigen die erfindungsgemäßen Thermistoren auch bei geringeren Temperaturen eine gegenüber herkömmlichen NTC-Thermistoren deutlich höhere elektrische Leitfähigkeit, so daß sie auch bei niedrigeren Temperaturen mit einfacher Signalverarbeitung sinnvoll einsetzbar sind.

Als vorteilhaft hat es sich erwiesen, wenn der Thermistor ein Mischoxidmaterial umfaßt, bei dem für das Erdalkalimetall M vorzugsweise Mg, Ca, Sr oder Ba eingesetzt wird.
Die Indizes x und y in der allgemeinen Formel Ln_{1 - y}M_{y}A_{1 - x}BₓO₃ liegen zweckmäßigerweise für x im Bereich von 0 bis 0,5 bzw. für y im Bereich von 0,01 bis 0,5. Als ein typisches Beispiel für ein Mischoxid eines erfindungsgemäßen Thermistors wird Y_{0,8}Ca_{0,2}Cr_{0,8}Ga_{0,8}O₃ angesehen.

Es ist eine weitere Aufgabe der Erfindung Verfahren zur Herstellung von Thermistoren anzugeben, die auf kostengünstige Weise eine Massenfertigung für unterschiedliche Geometrien erlauben, ohne daß die konkreten Bauformen oder Geometrien die elektrischen Eigenschaften des Thermistors nennenswert beeinflussen.

Die vorstehende Aufgabe wird erfindungsgemäß mit den kennzeichnenden Merkmalen der Ansprüche 4, 5 oder 6 gelöst. Dabei ist das Auftragen des Mischoxidmaterials in Dünn- und/oder Dickschichttechnik mit anschließenden Anbringen von Anschlußkontakten ein äußerst rationelles und fertigungstechnisch flexibles Verfahren, wobei die Ausgestaltung des Thermistors als dünne Schicht keine Einschränkungen in der Signalausbeute auch bei niedrigen Temperaturen nachsichzieht.

Im Rahmen der Dickschichttechnik kann das Material mittels Siebdruck oder auch durch Aufspritzen oder Aufpinseln einer entsprechenden Paste, die das Mischoxidmaterial des Thermistors umfaßt, auf eine hochtemperaturstabile Unterlage aufgebracht werden. Als hochtemperaturstabile Unterlage dient beispielsweise eine Aluminiumoxid-Substrat, auf dem neben dem Thermistor weitere Sensoren oder einer elektrische Schaltung angeordnet sein können. Nach dem Auftragen des Mischoxidmaterial des Thermistors folgt in der Regel ein Einbrand und danach das Anbringen von Anschlußkontakten. Für letzteres hat sich das Aufbringen von Leitpasten in Form von Leiterbahnen oder/und von Kontaktpads bewährt, die weiterhin als Kontaktflächen für darauf aufzuschweißende oder anzulötende Drähte dienen.

Eine ebenfalls vorteilhafte Dickschichttechnik stellt das Plasmaspritzen dar, wobei hier das Mischoxidmaterial in eine Plasmalichtbogen erschmolzen und dann direkt auf den hochtemperaturstabilen Träger aufgespritzt wird. Ein anschließender Einbrand entfällt. Es folgt dann wie üblich das Anbringen von Anschlußkontakten, beispielsweise durch Aufdrucken von Kontaktflächen, an die danach ein Draht angeschweißt oder angelötet werden kann.

Als Dünnschichttechnik hat sich das reaktive Sputtern bewährt, wobei das binäre oder ternäre Metalloxid als Sputtertarget verwendet wird und zur Vermeidung der teilweisen Reduktion der zu erzeugenden Schicht während des Sputterprozeßes dem Sputtergas kontrolliert Sauerstoff beigemischt wird.

Eine Kombination von den geschilderten Dick- und Dünnschichtechniken zur Herstellung eines Thermistors kann vorteilhaft sein.

Ein weiteres Verfahren zur Herstellung von Thermistoren ist das Verpressen und Sintern des pulverförmigen Mischoxidmaterials und das anschießende Anbringen von Anschlußkontakten. Auch dieses Verfahren hat sich als kostengünstig und rationell bewährt.

Daneben läßt sich der erfindungsgemäße Thermistor auch mittels Foliengießtechnik herstellen, wobei das pulverförmige Mischoxidmaterial mit organischen Bindemitteln zu einem gießfähigen Schlicker verarbeitet wird, der zu einer Folie ausgegossen wird. Aus dieser Folie können die unterschiedlichsten Geometrien ausgestanzt, gesintert und mit Anschlußkontakten versehen werden. Die Folie kann auch auf einen hochtemperaturstabilen Träger, auf dem gegebenfalls eine elektrische Schaltung angeordnet ist, auflaminiert werden, um anschließend in dieser Kombination in einem Sinterofen eingebrannt zu werden.

Der nach einem der vorgenannten Verfahren hergestellte Thermistor mit einem Mischoxidmaterial der allgemeinen Formel Ln_{1 - y}M_{y}A_{1 - x}BₓO₃ findet Verwendung als Temperaturfühler für einen Temperaturbereich zwischen - 40°C und 1100°C. Besonders vorteilhaft ist seine Funktion im Temperaturbereich zwischen 300°C und 1100°C, wobei diese Temperaturen typisch sind für Temperaturen der Abgase von Verbrennungsanlagen. Demgemäß wird der Thermistor bevorzugt als Temperaturfühler in einer Sensoranordnung zur Überwachung von Verbrennungsabgasen eingesetzt.

Zur näheren Erläuterung der Erfindung dienen die folgenden Beispiele:

Zur Herstellung des perowskitischen Mischoxidmaterials als Vormaterial zur Herstellung der Thermistoren wird üblicherweise die sogenannte Oxidmethode angewandt. Dabei wird eine Auswahl aus Oxidpulvern, wie beispielsweise La₂O₃·1 H₂O , Cr₂O₃ , M(CO₃)₂ , wobei M für ein Erdalkalielement steht, Ga₂O₃ und/oder In₂O₃ im stöchiometrischen oder nichtstöchiometrischen Verhältnis gemischt (Mischmahlung) und anschließend bei 1400°C geglüht. Dabei entsteht als Reaktionsprodukt das pulverförmige Mischoxid, z.B. La_{1-y}Ca_{y}Cr₁₋ₓGaₓO₃ oder La_{1-y}SrₓCr₁₋ₓInₓO₃ . Eine zweite Sinterung bei 1600°C kann vorteilhaft sein, um eine vollständige Umsetzung und die gewünschte Morphologie der Mischoxidverbindung zu erreichen.
Erfindungsgemäße Thermistormaterialien sind auch die Verbindungen Y_{1-y}Ca_{y}CrO₃ mit y zwischen 0,01 und 0,5 , Y_{0,5}Ca_{0,5}Cr₁₋ₓGaₓO₃ mit x = 0,2 oder x = 0,5 , Y_{0,8}Ca_{0,2}Cr_{0,8}Ga_{0,2}O₃ und Gd_{0,8}Sr_{0,2}Cr_{0,8}Ga_{0,2}O₃ , die ebenfalls nach der Oxidmethode hergestellt und anschließend zu einem Thermistorbauteil weiterverarbeitet werden. Dabei werden die Mischoxidpulver unter Zugabe eines Anpastmittels zu einer Paste verarbeitet, die in Siebdrucktechnik auf ein Aluminiumoxid-Substrat aufgetragen und eingebrannt werden. Auf dem Aluminiumoxid-Substrat kann neben der Thermistorschicht auch ein amperometrischer, potentiometrischer oder resistiver Gassensor mit einem Heizelement angeordnet sein, der ebenfalls in Dickschichttechnik auf das Substrat aufgebracht wurde. Die gesamte Anordnung ist dafür geeignet im Abgasstrom von Verbrennungsanlagen eingesetzt zu werden und dort die Temperatur der Sensoranordnung zu bestimmen und ggf. die Anteile verschiedener Gase zu überwachen.

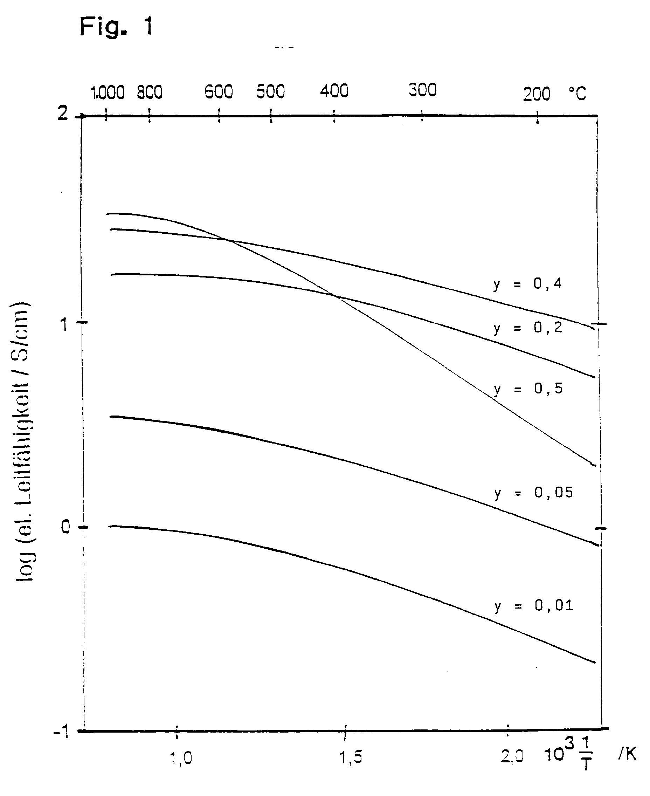

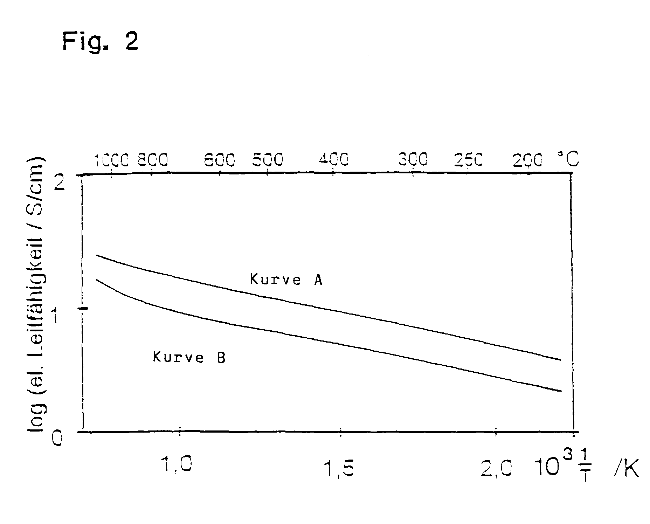

Für die erfindungsgemäßen Thermistoren wird eine temperaturabhängige elektrische Leitfähigkeit (reziprok vom spezifischen elektrischen Widerstand) gemäß den Figuren 1 bis 3 festgestellt. Die elektrische Leitfähigkeit ist in den Figuren jeweils logarithmisch aufgetragen. Zum besseren Verständnis enthalten die Figuren 1 und 2 zusätzlich zur Auftragung 1/T eine Temperaturachse mit den absoluten Temperaturen in °C.

In Figur 1 wird im Temperaturbereich zwischen 200°C und 1000°C die Auswirkungen des Calciumanteils auf die spezifische elektrische Leitfähigkeit und die Empfindlichkeit des Thermistors mit dem Mischoxid Y_{1-y}Ca_{y}CrO₃ aufgezeigt, wobei bei einem stöchiometrischen Calciumanteil von 0,5 die höchste Empfindlichkeit erzielt wird.

In Figur 2 sind die spezifischen elektrischen Leitfähigkeiten von Y_{0,8}Ca_{0,2}Cr_{0,8}Ga_{0,2}O₃ (Kurve A) und Gd_{0,8}Sr_{0,2}Cr_{0,8}Ga_{0,2}O₃ (Kurve B) zwischen 200°C und 1000°C im Vergleich aufgetragen. Der Thermistor mit dem Mischoxid Y_{0,8}Ca_{0,2}Cr_{0,8}Ga_{0,2}O₃ zeigt von beiden die höhere Leitfähigkeit, wobei aber der Temperaturkoeffizient für beide Thermistoren mit etwa -10 ‰ /K gleich ist.

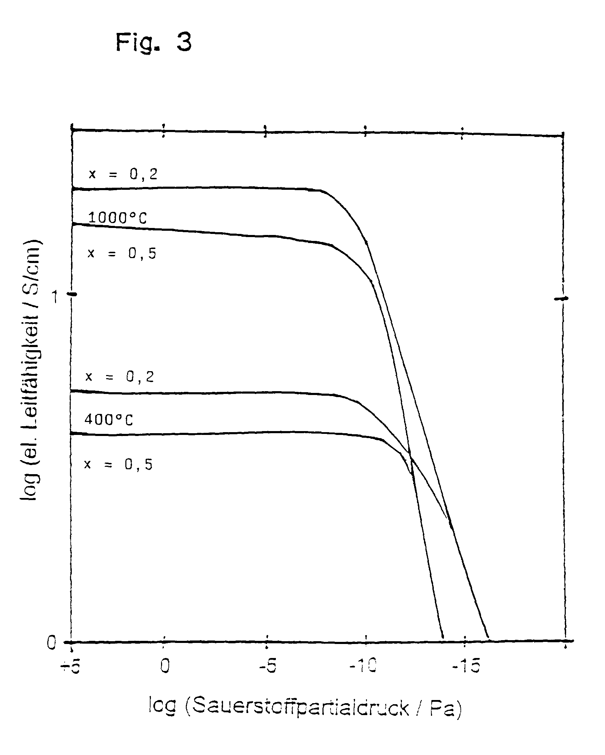

In Figur 3 ist für 400°C und für 1000°C jeweils die Abhängigkeit der elektrischen Leitfähigkeit gegenüber dem Sauerstoffpartialdruck für Thermistoren gemäß der Mischoxidverbindung Y_{0,5}Ca_{0,5}Cr₁₋ₓGaₓO₃ aufgetragen, wobei Gallium mit x = 0,2 oder x = 0,5 einen Teil des Chroms ersetzt. Es wird deutlich, daß über einen weiten Sauerstoffpartialdruckbereich die elektrische Leitfähigkeit der Thermistoren gleichbleibt und auch der variierte Galliumanteil sich nicht nennenswert auf die elektrische Leitfähigkeit auswirkt. Derartige Thermistoren sind besonders geeignet für die Temperaturüberwachung unter rasch wechselnden Gasatmosphären mit niedrigem Sauerstoffpartialdruck, wie dies bei Abgasen von Verbrennungsanlagen der Fall ist.

## Patentansprüche

1. Thermistor aus einem Mischoxidmaterial, das einen negativen Temperaturkoeffizienten des spezifischen elektrischen Widerstands und eine perowskitische Kristallstruktur aufweist, mit einer Zusammensetzung gemäß der allgemeinen Formel
Ln_{1 - y} M_{y}A_{1 - x} BₓO₃
, wobei Ln wenigstens ein Seltenerdelement oder eine Mischung von diesen ist, M mindestens ein Element aus der Reihe der Erdalkalien ist, A aus Chrom oder Zirkon gebildet ist und B aus Gallium oder Indium gebildet ist.

2. Thermistor aus einem Mischoxidmaterial nach Anspruch 1, dadurch gekennzeichnet, daß für das Element M aus der Reihe der Erdalkalien vorzugsweise Mg, Ca, Sr oder Ba eingesetzt wird.

3. Thermistor aus einem Mischoxidmaterial nach einem der Ansprüche 1 bis 2, dadurch gekennzeichnet, daß für die Zusammensetzung der allgemeinen Formel Ln_{1 - y} M_{y}A_{1 - x} BₓO₃ x im Bereich von 0 bis 0,5 und y im Bereich von 0,01 bis 0,5 liegt.

4. Verfahren zur Herstellung des Thermistors gemäß Anspruch 1 durch Aufbringen des Mischoxidmaterials in Dünn- und/oder Dickschichttechnik auf eine hochtemperaturstabile Unterlage und anschließendes Sintern und Anbringen von Anschlußkontakten.

5. Verfahren zur Herstellung des Thermistors gemäß Anspruch 4, dadurch gekennzeichnet, daß als Dickschichttechnik Siebdrucken und /oder Plasmaspritzen eingesetzt wird.

6. Verfahren zur Herstellung des Thermistors gemäß Anspruch 4, dadurch gekennzeichnet, daß als Dünnschichttechnik reaktives Sputtern eingesetzt wird.

7. Verfahren zur Herstellung des Thermistors gemäß Anspruch 1 durch Verpressen und Sintern des Mischoxidmaterials und anschließendes Anbringen von Anschlußkontakten.

8. Verfahren zur Herstellung des Thermistors gemäß Anspruch 1 in dem das Mischoxidmaterial zu einer keramischen Folie verarbeitet wird, aus der verschiedene Geometrien ausgestanzt, gesintert werden, an die anschließend Anschlußkontakten angebracht werden.

9. Verwendung des Thermistors nach Anspruch 1 als Temperaturfühler für einen Temperaturbereich zwischen - 40°C und 1100°C.

10. Verwendung des Thermistors nach Anspruch 9 für einen Temperaturbereich zwischen 300°C und 1100°C

11. Verwendung des Thermistors als Temperaturfühler nach Anspruch 9 oder 10 in einer Sensoranordnung zur Überwachung von Verbrennungsabgasen.
